# EUROPÄISCHE PATENTANMELDUNG

(11) **EP 1 164 058 A2**
(43) Veröffentlichungstag der Anmeldung: **19.12.2001**
(21) Anmeldenummer: 01112029.2
(22) Anmeldetag: 23.05.2001
(51) Int. Cl.: B60R 21/16

(54) **Gassack und Verfahren zum Falten eines Gassackes**

(30) Priorität: 13.06.2000 DE 20010507 U
(71) Anmelder: TRW Occupant Restraint Systems GmbH & Co. KG, 73553 Alfdorf (DE)
(72) Erfinder: Berger, Jürgen, 73557 Mutlangen (DE); Hieber, Wolfgang, 73540 Heubach-Buch (DE)
(74) Vertreter: Sties, Jochen, Dipl.-Ing.

(57) **Zusammenfassung**

Die Erfindung betrifft einen gefalteten Gassack für ein Fahrzeuginsassen-Rückhaltesystem, der erste und eine zweite, gedachten Seitenränder (14,16) aufweist, die den gefalteten Gassack (10) begrenzen. Zwei aufeinanderliegende Wandungen des Gassacks (10) sind in Falten (12) gelegt sind, deren Faltkanten (18) geradlinig verlaufen und zueinander parallel sind. Von einem der Seitenränder (14,16) aus gemessen, treten wenigstens zwei unterschiedliche Faltenhöhen der Falten (12) auf.

## Beschreibung

Die Erfindung betrifft einen gefalteten Gassack für ein Fahrzeuginsassen-Rückhaltesystem, bei dem zwei aufeinanderliegende Wandungen des Gassacks in Falten gelegt sind.

Gassäcke, denen bei einem Unfall im aufgeblasenen Zustand die Funktion zukommt, einen Fahrzeuginsassen vor Verletzungen zu bewahren, können vor ihrer Aktivierung, d.h. dem Aufblasen, gefaltet, meist in einem Gehäuse, an verschiedenen Stellen des Fahrzeugs angeordnet sein. Vor allem Seitengassäcke, die aufgeblasen Teile der Seitenscheiben des Fahrzeugs abdecken, um den Kopf des Fahrzeuginsassen zu schützen, werden oft mit parallel zueinanderliegenden Falten zusammengelegt, um in einem langgestreckten Gehäuse verstaut zu werden. Aufgrund des sehr beschränkten Platzangebots sollte das gefaltete Gassackpaket so klein wie möglich sein.

Nach seiner Aktivierung muß sich der Gassack sicher und schnell entfalten, wofür nicht zuletzt die Faltung des Gassacks entscheidend ist. Bisher sind Gassäcke bekannt, die in gleichmäßige, gleichhohe aufeinanderfolgende Falten gelegt sind, wobei das so entstandene Gassackpaket in einem Gehäuse untergebracht ist.

Aufgabe der Erfindung ist es, einen Gassack mit einer Faltung vorzuschlagen, die den Platzbedarf des Gassackpakets reduziert und die Entfaltung des Gassacks beeinflussen kann.

Zu diesem Zweck ist bei einem gefalteten Gassack, der erste und einen zweite (gedachten) Seitenränder aufweist, die den gefalteten Gassack begrenzen, wobei zwei aufeinanderliegende Wandungen des Gassacks in Falten gelegt sind, deren Faltkanten geradlinig verlaufen und zueinander parallel sind, vorgesehen, daß, von einem der Seitenränder aus gemessen, wenigstens zwei unterschiedliche Faltenhöhen der Falten auftreten. Unter einer Falte ist im folgenden eine Faltkante mit den beiden sich an diese anschließenden Gassackabschnitten zu verstehen. Als Höhe der Falte wird in diesem Zusammenhang der Abstand einer Faltkante von einem Seitenrand des gefalteten Gassacks bezeichnet, in Unterscheidung von der Stapeldicke einer Falte, die beim gefalteten Gassack als der Abstand zweier Faltkanten am gleichen Seitenrand des Gassacks definiert ist. Die Seitenränder des gefalteten Gassacks werden durch die jeweils äußeren Faltkanten bestimmt. Der Abstand der Seitenränder kann über den maximalen Abstand zweier auf gegenüberliegenden Seitenrändern liegenden Faltkanten definiert werden. Die Falten erstrecken sich beim erfindungsgemäßen Gassack nicht notwendigerweise von einem Seitenrand bis zum anderen Seitenrand des Gassackpakets, sondern können auch eine beliebige Höhe kleiner als der Abstand der beiden Seitenränder annehmen. Die Vorteile dieser Faltung liegen in der Möglichkeit, das Packvolumen des Gassackpakets zu reduzieren, sowie durch eine entsprechende Verteilung der Faltenhöhen das Austrittsverhalten des Gassacks zu beeinflussen.

Die Falten liegen bevorzugt in zueinander parallelen, vertikal übereinander angeordneten Ebenen. Alle Falten des gefalteten Gassacks haben bevorzugt zueinander parallele Faltkanten.

Die hier aus Gründen der Anschaulichkeit zueinander parallel angenommenen Seitenränder sind durch wenigstens einige Faltkanten des Gassacks auf jeder Seite des gefalteten Gassacks definiert.

In einer ersten bevorzugten Ausführungsform der Erfindung ist die Abfolge der Höhe der Falten so gewählt, daß die Faltkanten zweier aufeinanderfolgender Falten nicht direkt übereinanderliegen. Da auf diese Weise zwei am selben Seitenrand aufeinanderfolgende Faltkanten gegeneinander versetzt angeordnet sind, wird das Volumen des Gassackpakets verringert, da die Faltkanten aufgrund ihres Kurvenradius in einem Gassackpaket stärker auftragen, also mehr Platz beanspruchen, als die zwischen ihnen liegenden Gassackabschnitte.

Es ist auch möglich, daß an einem Seitenrand alle diesem Seitenrand zugewandten Faltkanten des gefalteten Gassacks übereinander liegen.

In einer weiteren bevorzugten Ausführungsform ist die Abfolge der Höhen der Falten so gewählt, daß der Schwerpunkt des gefalteten Gassacks neben einer gedachten Mittellinie des gefalteten Gassacks liegt, um eine Austrittsrichtung des Gassacks bei einem Aufblasen des Gassacks zu beeinflussen. Die Abfolge der Höhen der Falten kann dabei so gewählt werden, daß z.B. nur wenige Faltkanten am einen Seitenrand des Gassackpakets auftreten, dagegen viele am anderen Seitenrand, wodurch die Masse des Gassacks im gefalteten Zustand asymmetrisch von einer gedachten Mittellinie, die in der Mitte zwischen den beiden Seitenrändem verläuft, angeordnet ist. Da auf diese Weise der Schwerpunkt des Gassackpakets von der Mittellinie versetzt ist, kann die Austrittsrichtung des Gassackes beim Aufblasen von der Mittellinie abweichen.

Vorzugsweise entspricht die Höhe der aufeinanderfolgenden Falten einer sich wiederholenden Abfolge von Faltenhöhen, wobei wenigstens zwei der Faltenhöhen unterschiedlich sind. Hierdurch läßt sich das Falten des Gassacks vereinfachen. Eine bevorzugte Abfolge besteht in der Abfolge einer tiefen Falte auf eine flache Falte, eine andere bevorzugte Abfolge besteht in der Abfolge von mehreren stetig flacher werdenden Falten. Besonders in der Kombination mit oben genannten Merkmalen läßt sich so eine weite Variation der Lage des Schwerpunkts des Gassackpakets oder allgemeiner der Form des Gassackpakets bei möglichst geringem Packvolumen erzielen.

Eine andere vorteilhafte Anwendung besteht darin, den Gassack in einem Gassackmodul mit Gasausströmöffhungen anzuordnen und die den Gasausströmöffnungen nahen Falten so anzuordnen, daß sie die Gasausströmöffnungen wenigstens teilweise verdecken. Dies erlaubt es, die Befüllung des Gassacks vor allem im oberen Bereich zu beeinflussen.

Die Erfindung ist vor allem für Seitengassäcke geeignet, kann jedoch auch vorteilhaft für Beifahrergassäcke oder jeden beliebigen anderen Gassack, der mit geradlinigen parallelen Falten zusammengelegt wird, eingesetzt werden.

Weitere Merkmale und Vorteile der Erfindung ergeben sich aus der nachfolgenden Beschreibung mehrerer Ausführungsbeispiele in bezug auf die beigefügten Figuren. In diesen zeigen:
- Figur 1 einen Schnitt durch einen erfindungsgemäßen Gassack, gefaltet gemäß einer ersten Art;
- Figur 2 einen Schnitt durch einen erfindungsgemäßen Gassack, gefaltet gemäß einer zweiten Art;
- Figur 3 einen Schnitt durch einen erfindungsgemäßen Gassack gefaltet gemäß einer dritten Art;
- Figur 4 einen Schnitt durch einen Gassack, gefaltet gemäß dem Stand der Technik; und
- Figur 5 einen Schnitt durch ein Gassackmodul mit einem erfindungsgemäßen gefalteten Gassack.

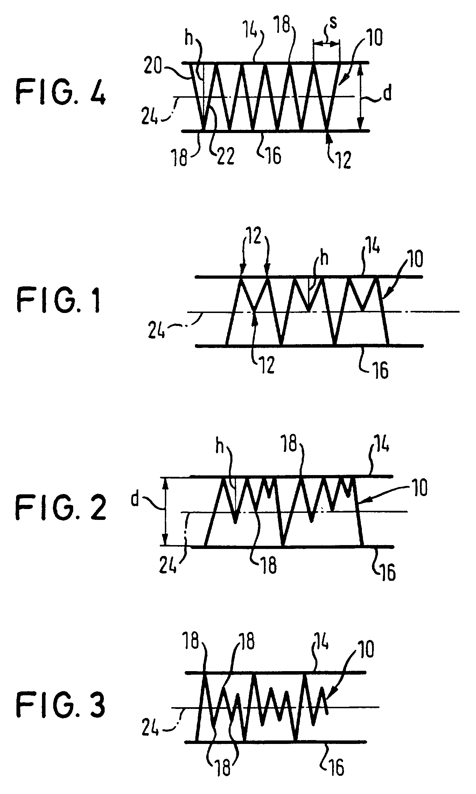

Figur 4 zeigt einen bekannten gefalteten Gassack 10, in der in aufeinanderfolgende gleichhohe Falten 12 gelegt ist. Eine Falte 12 besteht aus einer Faltkante 18 und den beiden sich von dieser Faltkante erstreckenden Gassackabschnitten, in Figur 4 markiert als 20 und 22. Die Faltenhöhe h entspricht dem Abstand d zwischen zwei (gedachten) Seitenrändern 14, 16, die durch den Abstand der Faltkanten 18 definiert ist. Der Abstand d kann dem Abstand zweier Gehäusewände entsprechen. In den hier gezeigten Ausführungsbeispielen sind die Seitenränder 14, 16 zueinander parallel.

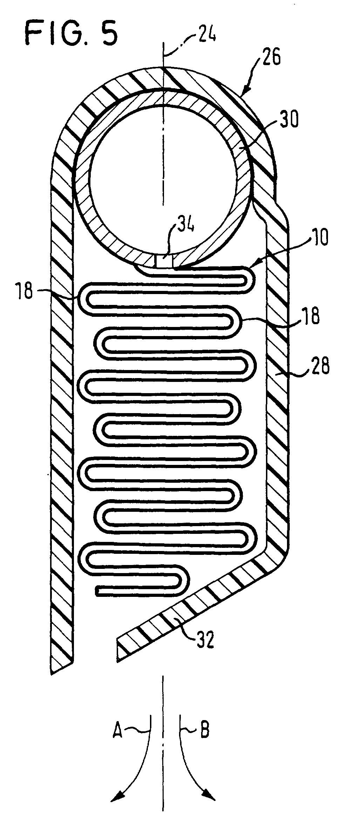

Die hier dargestellten Falten sind aus Anschauungsgründen nur mit einer Linie dargestellt, bestehen aber in Wirklichkeit aus zwei aufeinanderliegenden Gassackwandungen, wie in Figur 5 zu sehen ist. Ebenfalls aus Darstellungsgründen sind die Falten auseinandergezogen gezeigt, während sie im gefalteten Gassack, dem sogenannten Gassackpaket natürlich mit möglichst geringem Zwischenraum angeordnet sind.

Als Stapeldicke s ist im folgenden der Abstand zweier Faltkanten 18 am gleichen Seitenrand definiert.

Die Figuren 1 bis 3 zeigen erfindungsgemäße gefaltete Gassäcke, gemäß verschiedener möglicher Faltungsarten. In Figur 1 ist der Gassack 10 so gefaltet, daß sich von einem Seitenrand 14 aus gesehen jede zweite Falte nicht über die gesamte Höhe d, sondern nur über die halbe Höhe d bis auf eine (gedachte) Mittellinie 24 erstreckt. Bei einem Gassack mit dieser Faltung liegt ein größerer Teil des Gassackmaterials auf der Seite des ersten Seitenrands 14 als auf der Seite des zweiten Seitenrandes 16, damit ist der Schwerpunkt des Gassackpakets in Richtung des ersten Seitenrandes 14 verschoben.

Der in Figur 2 gezeigte Gassack 10 stellt in seiner Faltung dasselbe Prinzip zur Schau, wobei in diesem Fall, wiederum vom ersten Seitenrand 14 aus gesehen, eine sich wiederholende Abfolge von vier Falten gebildet ist, deren Faltkanten 18 auf der einen Seite stets am ersten Seitenrand 14 liegen und sich, vom anderen Seitenrand 16 gesehen, stetig von diesem entfernen, so daß eine Folge von Falten mit stetig abnehmender Faltenhöhe h entsteht. Bei dieser Faltung sind die zum zweiten Seitenrand 16 gerichteten Faltkanten 18 jeweils zweier aufeinanderfolgender Falten gegeneinander versetzt angeordnet, so daß die voluminösen Faltkanten 18 nicht direkt aufeinanderliegen, um Packvolumen einzusparen. Auch bei dieser Faltung ist der Schwerpunkt des Gassackpakets in Richtung des ersten Seitenrandes 14 verschoben.

Figur 3 zeigt einen gefalteten Gassack 10, dessen Schwerpunkt auf der Mittellinie 24 liegt, bei dem alle Faltkanten 18 entlang der jeweiligen Seitenränder 14, 16 gegeneinander versetzt angeordnet sind.

In Figur 5 ist ein gefalteter Gassack 10 in einem Gassackmodul 26, das ein Gehäuse 28 aufweist, gezeigt. In den Gassack 10 ist eine Gaslanze 30 eingesetzt, durch die bei der Aktivierung des Gassackes über Ausströmöffnungen 34 Gas in den Gassack strömt, um diesen aufzublasen.

Die Gaslanze 30 ist am oberen Ende des Gehäuses 28 angeordnet. Das Gehäuse 28 weist am unteren Ende eine Klappe 32 auf, durch die der Gassack 10 beim Entfalten austritt. Mit 24 ist in Figur 5 die bereits aus den Figuren 1 bis 4 bekannte gedachte Mittellinie bezeichnet.

Der in Figur 5 gezeigte gefaltete Gassack 10 weist eine Faltung auf, bei der die Faltkanten 18 auf jeweils gleichen Seitenrändern gegeneinander versetzt angeordnet sind. Da sich auf diese Weise das Volumen des gefalteten Gassackpakets verringern läßt, kann die Länge des Gehäuses verkürzt werden. Der gezeigte Gassack 10 entfaltet sich aufgrund seiner symmetrischen Schwerpunktlage beim Aufblasen entlang der Mittellinie 24.

Wird ein Gassack mit einer Faltung gemäß Figur 1 oder Figur 2 verwendet, weicht aufgrund des von der Mittellinie 24 verschobenen Schwerpunkts die Austrittsrichtung des Gassacks von der Mittellinie 24 ab und der Gassack entfaltet sich in einer von der Mittellinie 24 abweichenden Richtung, in Figur 5 mit den Pfeilen A und B dargestellt.

Eine weitere Anwendungsmöglichkeit der verschiedenen dargestellten Faltverfahren liegt darin, die der Gaslanze 30 am nächsten liegenden Falten so zu plazieren, daß diese die Ausströmöffnungen 34 ganz oder teilweise verdecken. Auf diese Weise kann das Entfaltungsverhalten des Gassacks beeinflußt werden.

Es sind auch Gassäcke mit Faltungen denkbar, bei denen die Faltenhöhe an spezielle Gehäuseformen angepaßt ist, wobei der Querschnitt des Gehäuses von einem Rechteckquerschnitt abweicht, um besser an den Einbauraum angepaßt zu sein.

## Patentansprüche

1. Gefalteter Gassack für ein Fahrzeuginsassen-Rückhaltesystem, der erste und eine zweite, gedachten Seitenränder (14, 16) aufweist, die den gefalteten Gassack (10) begrenzen, wobei zwei aufeinanderliegende Wandungen des Gassacks (10) in Falten (12) gelegt sind, deren Faltkanten (18) geradlinig verlaufen und zueinander parallel sind, wobei, von einem der Seitenränder (14, 16) aus gemessen, wenigstens zwei unterschiedliche Faltenhöhen der Falten (12) auftreten.

2. Gefalteter Gassack nach Anspruch 1, **dadurch gekennzeichnet, daß** die Abfolge der Höhe (h) der Falten (12) so gewählt ist, daß die Faltkanten (18) zweier an einem gleichen Seitenrand (14, 16) aufeinanderfolgender Falten (12) nicht direkt übereinanderliegen.

3. Gefalteter Gassack nach Anspruch 1, **dadurch gekennzeichnet, daß** alle Faltkanten (18) an einem Seitenrand (14, 16) des gefalteten Gassacks (10) übereinanderliegen.

4. Gefalteter Gassack nach einem der vorhergehenden Ansprüche, **dadurch gekennzeichnet, daß** die Abfolge der Höhen (h) der Falten (12) so gewählt ist, daß der Schwerpunkt des gefalteten Gassacks (10) neben einer gedachten Mittellinie (24) des gefalteten Gassacks (10) liegt, um eine Austrittsrichtung des Gassacks (10) bei einem Aufblasen des Gassacks zu beeinflussen.

5. Gefalteter Gassack nach einem der vorhergehenden Ansprüche, **dadurch gekennzeichnet, daß** die Höhe (h) der aufeinanderfolgenden Falten (12) einer sich wiederholenden Abfolge von Faltenhöhen, wobei wenigstens zwei der Faltenhöhen unterschiedlich sind , entspricht.

6. Gefalteter Gassack nach Anspruch 5, **dadurch gekennzeichnet, daß** die Abfolge in der Abfolge einer tiefen Falte auf eine flache Falte besteht.

7. Gefalteter Gassack nach Anspruch 5, **dadurch gekennzeichnet, daß** die Abfolge in der Abfolge von mehreren stetig flacher werdenden Falten besteht.

8. Gefalteter Gassack nach einem der vorhergehenden Ansprüche, **dadurch gekennzeichnet, daß** der Gassack (10) in einem Gassackmodul (26) mit Gasausströmöffnungen (34) angeordnet ist und daß die den Gasausströmöffnungen (34) nahen Falten (12) so angeordnet sind, daß sie die Gasausströmöffnungen (34) wenigstens teilweise verdecken.

9. Gefalteter Gassack nach einem der vorhergehenden Ansprüche, **dadurch gekennzeichnet, daß** der Gassack (10) ein Seitengassack oder ein Gassack für ein Beifahrer-Rückhaltesystem ist.
